(19)

**Europäisches Patentamt**
**European Patent Office**
**Office européen des brevets**

(11) **EP 3 690 772 A1**

(12) **EUROPEAN PATENT APPLICATION**

(43) Date of publication:
**05.08.2020 Bulletin 2020/32**

(51) Int Cl.:
***G06Q 10/06*** *(2012.01)*

(21) Application number: **20153993.9**

(22) Date of filing: **28.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2019 IN 201921003594**

(71) Applicant: **Tata Consultancy Services Limited Maharashtra (IN)**

(72) Inventors:
• **Jain, Ankita**
  **411013 Pune, Maharashtra (IN)**

• **Srivastava, Rajiv Radheyshyam**
  **411013 Pune, Maharashtra (IN)**
• **Palshikar, Girish Keshav**
  **411013 Pune, Maharashtra (IN)**
• **Ramrakhiyan, Nitin Vijaykumar**
  **411013 Pune, Maharashtra (IN)**
• **Hingmire, Swapnil Vishveshwar**
  **411013 Pune, Maharashtra (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHOD AND SYSTEM FOR SKILL MATCHING FOR DETERMINING SKILL SIMILARITY**

(57) A recruiting person handling profiles of candidates need thorough knowledge about various technologies related to requirements posted with respect to a job opening, so as to correctly interpret and identify skill level of each candidate. Lack of knowledge of the recruiting person may result in skilled candidates not getting shortlisted and candidates having no or less relevant skills getting selected, which would affect work force of an organization the candidates are being recruited for. The disclosure herein generally relates to data processing, and, more particularly, to a method and a system for determining skill similarity by using the data processing. The system automatically identifies skills that match each other, and the recruiting person may use this information to identify and shortlist right candidates for the job. The system generates skill vectors for each skill, and by comparing skill vectors of different skills, identifies skills that are similar to each other.

EP 3 690 772 A1

Building data corpus for an identified first skill — 202

Identifying a plurality of words that match the identified first skill, from the data corpus — 204

Generating a word vector each, for each of the plurality of identified words — 206

Generating a skill vector for the identified first skill, based on the word vectors of the plurality of identified words — 208

Comparing the skill vector of the identified first skill with skill vector of at least one other skill to perform skill matching — 210

Classifying the at least one other skill as relevant or irrelevant, based on the comparison — 212

200

Fig. 2

**Description**

CROSS-REFERENCE TO RELATED APPLICATIONS AND PRIORITY

The present application claims priority from Indian patent application no. 201921003594, filed on 29th January, 2019. The entire contents of the aforementioned application are incorporated herein by reference.

TECHNICAL FIELD

The disclosure herein generally relates to data processing, and, more particularly, to a method and a system for determining skill similarity by using the data processing.

BACKGROUND

Consider a scenario in which a recruitment specialist has to identify and select one or more candidates for a particular job. The one or more candidates may have submitted their profiles (resume/Curriculum Vitae (CV)) detailing their educational qualification, work experience, and so on. Traditionally, the recruitment specialist(s) has to manually check each profile, interpret the data correctly, and select right candidate for the job who may be further called up for remaining rounds of an interview process. Further, when a large number of resumes need to be analyzed to find the right candidate for a job position, amount of effort (in analyzing the large amount of data) required may be cumbersome, which also may affect the skill level analysis.
Skill level of the recruitment specialist in analyzing the data in the profiles is subjective. While some recruitment specialists interpret the contents of a candidate profile well, some may struggle may be due to their lack of knowledge in skill set of the candidate and the technologies or work experience related terminology used by the candidate. This can result in profile of a skilled candidate getting rejected or a not so skilled candidate getting selected, either scenarios affecting quality of work force of the organization for which the candidates are being recruited by the recruit specialist(s).
In addition to this, skill level analysis involves analysis of various terminologies that are associated with each skill. However, as some of the terminologies may have different meaning in different contexts, if a system is used to automate the skill level analysis, the system may take wrong meanings/definitions, which in turn adversely affects the skill level analysis. Some of the existing systems which are being used for determining relevant skill for a job description relies on concurrence of job postings. As a result the system fails to consider specific details pertaining to the job requirement and the skills, which in turn affects accuracy of recommendations generated by the system.

SUMMARY

Embodiments of the present disclosure presents technological improvements as solutions to one or more of the above-mentioned technical problems recognized by the inventors in conventional systems. For example, in one embodiment, method is provided. In this method, for each identified skill, a data corpus is built via one or more hardware processors. Further, one or more concepts that match the identified skill, at a plurality of different levels, are identified via the one or more hardware processors. Further, similarity score for each of the one or more concepts is generated, via the one or more hardware processors, wherein the similarity score of each of the one or more concepts represents extent of similarity of the concept with the identified skill. Further, the extent of similarity of each of the one or more concepts is compared with the identified skill, based on the similarity score, via the one or more hardware processors, and further classifies each of the one or more concepts as 'relevant' and 'irrelevant', via the one or more hardware processors.
In another aspect, a system is provided. The system includes one or more hardware processors, one or more communication interfaces, and one or more memory modules storing a plurality of instructions. The plurality of instructions when executed cause the one or more hardware processors to build a data corpus for an identified skill. Further the system identifies one or more concepts that match the identified skill, at a plurality of different levels. Further the system generates similarity score for each of the one or more concepts, wherein the similarity score of each of the one or more concepts represents extent of similarity of the concept with the identified skill. The system then compares the extent of similarity of each of the one or more concepts with the identified skill, based on the similarity score. The system then classifies each of the one or more concepts as 'relevant' and 'irrelevant' .
In yet another aspect, a non-transitory computer readable medium is provided. The non-transitory computer readable medium performs a skill matching for determining a skill similarity by performing the method described herein. In this method, for each identified skill, a data corpus is built via one or more hardware processors. Further, one or more concepts that match the identified skill, at a plurality of different levels, are identified via the one or more hardware processors. Further, similarity score for each of the one or more concepts is generated, via the one or more hardware processors, wherein the similarity score of each of the one or more concepts represents extent of similarity of the concept with the identified skill. Further, the extent of similarity of each of the one or more concepts is compared with the identified skill, based on the similarity score, via the one or more hardware processors, and further classifies each of the one or more concepts as 'relevant' and 'irrelevant', via the one or more hardware processors.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for performing skill matching, according to some embodiments of the present disclosure.
FIG. 2 is a flow diagram depicting steps involved in the process of skill matching using the system of FIG. 1, according to some embodiments of the present disclosure.
FIG. 3 is a flow diagram depicting steps involved in the process of classifying a concept as relevant or irrelevant, using the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

The system disclosed herein performs a skill matching during which the system identifies concepts that match each skill for which the skill matching is being performed. Information pertaining to the concepts matching each skill can be then used to identify skills that are similar to each other i.e. skill similarity. This information can be further used by a user (for example, a recruitment specialist) for identifying concepts matching a skill (skillset).

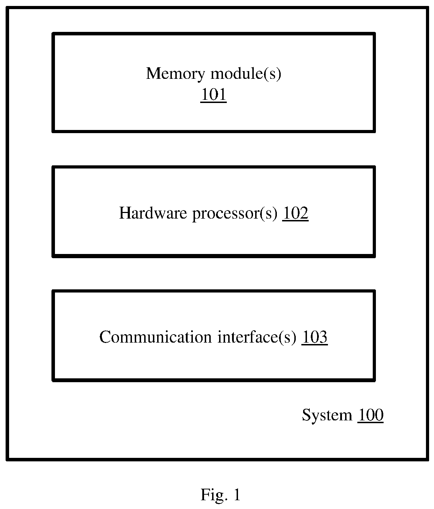

Referring now to the drawings, and more particularly to FIG. 1 through FIG. 3, where similar reference characters denote corresponding features consistently throughout the figures, there are shown preferred embodiments and these embodiments are described in the context of the following exemplary system and/or method.

FIG. 1 illustrates an exemplary system for performing skill matching, according to some embodiments of the present disclosure. In an embodiment, the system 100 includes one or more hardware processors 102, communication interface(s) or communication interface(s) 103, and one or more data storage devices or memory modules 101 operatively coupled to the one or more hardware processors 102. The one or more hardware processors 102 can be implemented as one or more microprocessors, microcomputers, microcontrollers, digital signal processors, central processing units, state machines, graphics controllers, logic circuitries, and/or any devices that manipulate signals based on operational instructions. Among other capabilities, the hardware processor(s) 102 are configured to fetch and execute computer-readable instructions stored in the memory module(s) 101. In an embodiment, the system 100 can be implemented in a variety of computing systems, such as laptop computers, notebooks, hand-held devices, workstations, mainframe computers, servers, a network cloud and the like.

The communication interface 103 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the communication interface(s) 103 can include one or more ports for connecting a number of devices to one another or to another server.

The memory module(s) 101 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more modules (not shown) of the system 100 can be stored in the memory module(s) 101.

In an embodiment, the one or more data storage devices or memory module(s) 101 are operatively coupled to the one or more hardware processors 102 and is configured to store a plurality of instructions, which when executed, cause one or more of the hardware processors 102 to execute steps of the method 200. The skill matching may be performed/executed by the system 100 so as to identify two or more skills that are similar to each other. This information would be helpful when a person is trying to identify skills that match a particular requirement or to identify relationship/similarity between different skills.

The system 100 initially identifies one or more skills or skillsets for which the skill matching is to be performed by the system 100. In an embodiment the one or more skills or skill sets are identified based on an obtained user input specifying the skill(s) or skillset(s) for which the skill matching is to be performed. In another embodiment, the system 100 generates a master list of skills, by searching a plurality of job/skill categories using any suitable process and application, from any online and/or offline sources. For the ease of explanation, the skill matching being performed by the system 100 is elaborated by considering only one skill (referred to as an 'identified first skill' henceforth).

The system 100 then uses appropriate web crawlers (and/or any other appropriate mechanism) to identify and fetch relevant data matching the identified first skill, from multiple sources. Further, the fetched relevant data is used to build a data corpus for the identified skill. If the data corpus is already present, then new data obtained using the crawlers is used to update the data corpus.

As the data that forms the data corpus is collected from different sources, the data may be of different types/categories and may even be in different formats. For the system 100 to further process the data in the data corpus, the data may have to be in at least one standard format. For example, most of the skills are noun forms or noun phrases which need to be identified and tagged before further processing. This is done during a pre-processing stage.

For example consider a skill "Java" and corresponding corpus. Consider that the corpus contains textual definition of Java as:

"Java is a general-purpose computer-programming language that is concurrent, class-based, object-oriented, and specifically designed to have as few implementation dependencies as possible. It is intended to let application developers "write once, run anywhere" (WORA), meaning that compiled Java code can run on all platforms that support Java without the need for recompilation. Java applications are typically compiled to byte code that can run on any Java virtual machine (JVM) regardless of computer architecture".

When this definition is analyzed, the following noun and noun phrases are obtained:

Table. 1

| computer-programming language |
|---|
| Concurrent |
| class-based |
| object-oriented |
| write once, run anywhere |
| Compiled |
| Byte code |
| java virtual machine |
| computer architecture |

These phrases defines the important features of java as a programming language. These are further used for training skill vectors.

The system 100 further selects a plurality of words that match the identified first skill (matching words), from the data corpus. In an embodiment, the system 100 uses any suitable technique/approach such as but not limited to Weighted point-wise mutual information (PMI)/weighted mutual information/mutual information for selecting the matching words. In this approach, the system 100 checks for and identifies words in the data corpus that co-occur i.e. in the vicinity of k words, wherein value of 'k' is pre-configured or dynamically configured with the system 100. Such words that co-occur, represented as $\{s_1, \{s_1w_1, s_1w_2,...\}\}$ are identified using any or all of the aforementioned techniques, and are used for measuring similarity such as $s_1$ and $s_2$. Also, words such as $s_1w1$ are considered related skill features and are used to find related next level important words, wherein such words are selected for further processing if the value of PMI measured is at least equal to an individual threshold value of PMI (Ti).

In the data corpus, data may be arranged at different levels. For example, there may be a primary level in which broad level data is captured, and in a secondary level, more details (for example, sub-categories) of the data captured in the primary level are captured and so on. Such words at each level may have a smaller weight i.e. indirectly proportional to a level value (which indicates level in which the data is present). For a skill $S_1$ (X) or $S_2$ (Y), the related words $S_1W1$, $S_1W2,...(x \in X$ or $y \in Y$) are evaluated as:

$$I(X;Y) = \sum_{y \in Y} \sum_{x \in X} \omega(x,y)p(x,y) \log \frac{p(x,y)}{p(x)p(y)} \;\text{---}\; (1)$$

In the similar manner, MI values are calculated at each level in the database and are considered for further processing when the calculated MI values are at least equal to the threshold value of PMI. The PMI values calculated and the corresponding threshold values act as a filtering mechanism to select a plurality of most relevant words for the identified first skill. The plurality of most relevant words selected may collectively represent the identified first skill.

In the next step, the system 100 generates word vector corresponding to the selected one or more words. In order to increase the power of representation of skill, vectors are constructed based on concepts or major features, hierarchically, which are identified from the skill descriptions or related documents from a sizeable corpus. The system 100 may use any suitable mechanism such as but not limited to Word2vec so as to generate the word vectors. The system 100 may use Global Vectors (GloVe) for the purpose of generating the word vectors. After identifying the word vectors corresponding to the selected one or more words, the system 100 identifies corresponding sub-concepts. The sub-concepts capture data at a detailed level, which in turn helps in representing the skills with more amount of data. A few examples of approaches/mechanisms for identifying the sub-concepts are given below:

1. <u>PMI</u>

The PMI of a pair of outcomes x and y belonging to discrete random variables X and Y quantifies discrepancy between the probability of their coincidence given their joint distribution and their individual distributions, assuming independence. Mathematically

$$\text{PMI (word\_1, word\_2)} = \text{Log (Prob(word\_1, word\_2) / (Prob(word\_1)}$$
$$\text{*Prob(word\_2)))} \;\text{---}\; (2)$$

Where,

N1 = no of documents containing word_1
N2 = no of documents containing word_2
N3 = no of documents containing word_1 and word_2 both
N= total no of documents

$$\text{Prob (word\_1)} = (N1+1)/N$$

(here 1 is used to avoid zero counts)

$$\text{Prob (word\_2)} = (N2+1)/N$$

(here 1 is used to avoid zero counts)

$$\text{Prob (word\_1, word\_2)} = (N3+1)/N$$

(here 1 is used to avoid zero counts)

Considering the example of "Java" as a skill: A textual corpus which contains definition of java is maintained. From this corpus the most relevant words which best describes java as a programming language are identified. The PMI allows identification/selection of features at different levels. This step may involve a level of filtering using one or more rules such as removal of names of knows entities. For example, the features identified at a first level are: Using PMI, top most relevant features of java from its text corpus are identified as:

- Object-oriented
- Threading
- Multiple inheritance

- Enterprise javabeans
- Operator overloading

Now at a second level, more data/features pertaining to each feature identified at the first level can be identified by the system 100. For example, consider the feature 'object-oriented' at the first level. Using the PMI, the following features corresponding to the feature 'object-oriented' are extracted, at a second level:

- multithreaded coding
- open recursion
- type checker
- reusability
- equivalence class
- behavioral subtyping
- responsibility- driven design
- data hiding
- maintainability

Such related features/concepts at different levels together represent the skill 'Java'. These words selection can be improved by varying the threshold on the PMI value.

Similarly the most relevant words for java skill at a second level can be found using PMI and so on. Once the final set of most relevant words describing java as a programming language is obtained (after a few iterations of the PMI) these words and their corpus are used to derive a word vector. The concept based skill vector is constructed by combining the word vectors of top n words for each skill.

## 2. **Top N words used along with skill vectors**

In this approach tf-idf is used for identifying and extracting top N concepts related to a skill from the corpus which constitutes skill definition documents. Hierarchal approach has been used to derive a final skill vector by applying mathematical operations on the underlying bottom level vectors of concepts which comprises skill definitions.

## 3. **Glove word embedding**

In this technique the word vectors of multiple word skills (for e.g. adobe flash player) are combined. Further, the vectors of constituent words are averaged and cosine similarity over averaged vectors is computed.

## 4. **Glove word embedding with weights**

In this technique the word vectors of multiple word skill are combined by using weighted average of vectors of individual words. idf of each word is used as the weight in weighted average. Hence the vectors of individual words which are constructed based on concepts extracted from skill definition documents are combined.

Some other similar techniques/approaches that may be used are wiki page word based tf-idf, wiki page word based tf-idf with POS tagging, wiki categories based, and so on.

The system 100 then combines the word vectors of the plurality of words selected, to generate a skill vector that represents the identified first skill.

For example, the skill vector for java is constructed using word2vec on relevant words as follows:
java 0.039524 0.035343 -0.047424 0.221947 0.387928 0.072270 -0.263133 0.618260 0.115518 0.361392 -0.207198 -0.110898 0.016941 0.147247 - 0.064796 -0.065994 -0.111694 0.316055 0.323939 -0.216628 -0.031829 - 0.400878 -0.189696 0.047052 0.101326 0.510335 -0.165501 -0.318649 0.166384 0.297322 0.236419 -0.307361 -0.407704 -0.449944 -0.164939 0.655986 -0.332154 0.060366 -0.082455 0.023325 -0.075327 -0.058168 - 0.044887 -0.301205 0.156303 -0.084173 0.091266 0.026871 -0.213642 - 0.361838

Similarly a numeric skill vector is derived for other skills as well. To compute the similarity between the two skills, cosine distance between the two skill vectors is used.

Using the same process, the system 100 can generate skill vectors for any skill. The skill vectors of different skills can be used by the system 100 to perform the skill matching. Skill matching is a process during which the system 100 tries to identify skills that are similar to each other. In order to perform the skill matching for the identified first skill and at least one another skill, the system 100 compares the skill vector of the identified first skill with that of the at least one other skill and generates a similarity score, wherein the similarity score represents/indicates extent of similarity of the skill vectors. Based on the extent of similarity, the system 100 classifies the at least one other skill as relevant (matching) or irrelevant (not matching). For example, consider that while performing skill matching for 'Java', the system 100 considers skill such as but not limited to JavaServer Pages (JSP), struts, Java XML and so on. The system generates the system 100 generates skill vectors for each of the skills being considered. During skill matching, the system 100 compares the skill vectors of Java with that of each of the JSP, struts, Java XML and so on. If the skill vectors of JSP is found to be more similar to that of Java (in comparison with that of the other skills considered), then the system 100 selects JSP as the skill that closely matching skill from all the skills considered. Likewise more than one skills may be identified as matching Java, based on the similarity.

This information may be used by the user to identify matching and non-matching skills while handling candidate profiles. It is to be noted that the skill matching can be performed to identify skills that are similar to each other, for any application which requires the skill matching to be performed, even though the description herein covers the profile matching application.

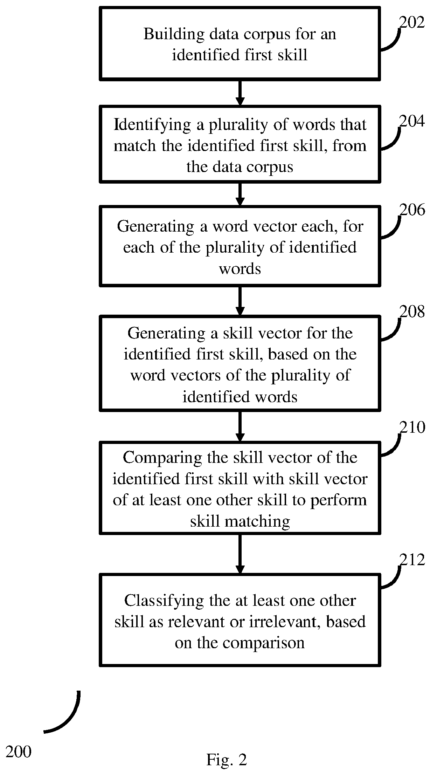

FIG. 2 is a flow diagram depicting steps involved in the process of skill matching using the system of FIG. 1, according to some embodiments of the present disclosure. Initially, for an identified first skill, the system 100 collects relevant data by using web crawlers and other similar mechanisms and builds (202) a data corpus. Further, from the data corpus, a plurality of most relevant words that match the identified first skill are identified (204) by the system 100. Further, for each of the plurality of most relevant words, the system 100 generates (206) a word vector each. Further, using the word vectors (for the plurality of most relevant words), the system 100 generates (208) a skill vector for the identified first skill.

Using the method covered in steps 202-208, the system 100 can generate skill vector for any skill. The system 100 performs a skill matching to identify one or more other skills that match the identified first skill (or any other skill considered), by comparing the skill vector of the identified first skill with that of the one or more other skills. Based on an extent of similarity (determined/identified during the skill matching) of each of the one or more other skills with the identified first skill, the system 100 classifies (210) each of the one or more other skills as relevant or irrelevant.

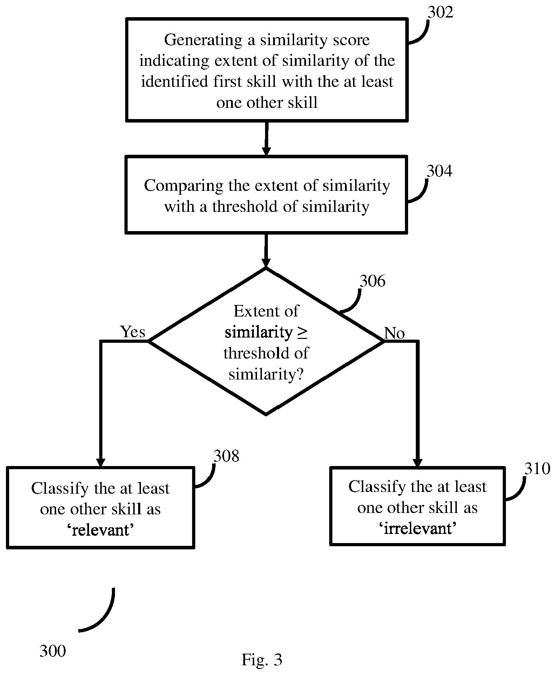

FIG. 3 is a flow diagram depicting steps involved in the process of classifying a concept as relevant or irrelevant, using the system of FIG. 1, according to some embodiments of the present disclosure. During the skill matching, the system 100 compares the skill vector of the identified first skill with that of at least one another skill. Based on how similar the skills (being compared) are, extent of similarity between the identified first skill and the at least one other skill vary. By comparing the skill vectors, the system 100 generates (302) a similarity score representing the extent of similarity.

The extent of similarity is compared (304) with a threshold of similarity. If the extent of similarity is equal to or greater than the threshold of similarity, the system 100 classifies (308) the at least one other skill that is being compared with the identified first skill, as relevant (i.e. matching the identified first skill). If the extent of similarity is less than the threshold of similarity, the system 100 classifies (310) the at least one other skill that is being compared with the identified first skill, as irrelevant (i.e. matching the identified first skill).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of skill matching. The embodiment, thus provides a mechanism to generate a skill vector for any skill being considered. Moreover, the embodiments herein further provides a mechanism to perform skill matching to identify relevant or irrelevant skills, based on the skill vector.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

**Claims**

1. A method (200) for skill matching, comprising:

   building (202), via one or more hardware processors, a data corpus for an identified first skill;
   identifying (204) a plurality of words that match the identified first skill, from the data corpus, via the one or more hardware processors;
   generating (206) word vector corresponding to each word from the plurality of words, via the one or more hardware processors;
   generating (208) a skill vector for the identified first skill, based on the word vectors corresponding to the plurality of words, via the one or more hardware processors; and
   comparing (210) the skill vector of the identified first skill with skill vector of at least one other skill, comprising:

      generating (302) a similarity score, via the one or more hardware processors, wherein the similarity score represents extent of similarity of the identified first skill with the at least one other skill; and
      classifying (212) the at least one other skill as 'relevant' or 'irrelevant', based on the similarity score, via the one or more hardware processors.

2. The method as claimed in claim 1, wherein building the data corpus for the identified first skill comprises:

   fetching data matching the identified first skill from one or more data sources;
   building the data corpus using the fetched data, if the data corpus for the identified first skill does not already exist; and
   updating the data corpus using the fetched data, if the data corpus for the identified first skill already exists.

3. The method as claimed in claim 1, wherein classifying the at least one other skill as 'relevant' or 'irrelevant' comprises:

   comparing (304) the extent of similarity with a threshold of similarity;
   classifying (308) the at least one other skill as relevant if the extent of similarity is greater than or equal to the threshold of similarity; and
   classifying (310) the at least one other skill as irrelevant if the extent of similarity is less than the threshold of similarity.

4. The method as claimed in claim 1, wherein generating the skill vector based on the word vectors comprising:

identifying a plurality of sub-concepts corresponding to each of the word vectors; and
generating the skill vector using the plurality of words, corresponding word vectors, and corresponding sub-concepts.

5. A system (100) for skill matching, comprising:

one or more hardware processors (102);
one or more communication interfaces (103); and
one or more memory modules (101) storing a plurality of instructions, wherein the plurality of instructions when executed cause the one or more hardware processors (102) to:

build (202) a data corpus for an identified first skill;
identify (204) a plurality of words that match the identified first skill, from the data corpus;
generate (206) word vector corresponding to each word from the plurality of words;
generate (208) a skill vector for the identified first skill, based on the word vectors corresponding to the plurality of words; and
compare (210) the skill vector of the identified first skill with skill vector of at least one other skill, comprising:

generating (302) a similarity score, via the one or more hardware processors, wherein the similarity score represents extent of similarity of the identified first skill with the at least one other skill; and
classifying (212) the at least one other skill as 'relevant' or 'irrelevant', based on the similarity score, via the one or more hardware processors.

6. The system (100) as claimed in claim 5, wherein the system (100) builds the data corpus for the identified first skill by:

fetching data matching the identified first skill from one or more data sources;
building the data corpus using the fetched data, if the data corpus for the identified first skill does not already exist; and
updating the data corpus using the fetched data, if the data corpus for the identified first skill already exists.

7. The system (100) as claimed in claim 5, wherein the system (100) classifies the at least one other skill as 'relevant' or 'irrelevant' by:

checking (304) whether the extent of similarity of the identified first skill with the at least one other skill, as indicated by the similarity score, exceeds a threshold of similarity;
classifying (308) the at least one other skill as relevant if the extent of similarity exceeds the threshold of similarity; and
classifying (310) the at least one other skill as irrelevant if the extent of similarity does not exceed the threshold of similarity.

8. The system (100) as claimed in claim 5, wherein the system (100) generates the skill vector based on the word vectors, by:

identifying a plurality of sub-concepts corresponding to each of the word vectors; and
generating the skill vector using the plurality of words, corresponding word vectors, and corresponding sub-concepts.

9. A non-transitory computer readable medium for skill matching, comprising one or more instructions, which when executed by one or more hardware processors causes a method for:

building, via one or more hardware processors, a data corpus for an identified first skill;
identifying a plurality of words that match the identified first skill, from the data corpus, via the one or more hardware processors;
generating word vector corresponding to each word from the plurality of words, via the one or more hardware processors;
generating a skill vector for the identified first skill, based on the word vectors corresponding to the plurality of words, via the one or more hardware processors; and

comparing the skill vector of the identified first skill with skill vector of at least one other skill, comprising:

> generating a similarity score, via the one or more hardware processors, wherein the similarity score represents extent of similarity of the identified first skill with the at least one other skill; and
> classifying the at least one other skill as 'relevant' or 'irrelevant', based on the similarity score, via the one or more hardware processors.

10. The non-transitory computer readable medium as claimed in claim 9, wherein the non-transitory computer readable medium builds the data corpus for the identified first skill by:

> fetching data matching the identified first skill from one or more data sources;
> building the data corpus using the fetched data, if the data corpus for the identified first skill does not already exist; and
> updating the data corpus using the fetched data, if the data corpus for the identified first skill already exists.

11. The non-transitory computer readable medium as claimed in claim 9, wherein the non-transitory computer readable medium classifies the at least one other skill as 'relevant' or 'irrelevant' by:

> comparing the extent of similarity with a threshold of similarity;
> classifying the at least one other skill as relevant if the extent of similarity is greater than or equal to the threshold of similarity; and
> classifying the at least one other skill as irrelevant if the extent of similarity is less than the threshold of similarity.

12. The non-transitory computer readable medium as claimed in claim 9, wherein the non-transitory computer readable medium generates the skill vector based on the word vectors by:

> identifying a plurality of sub-concepts corresponding to each of the word vectors; and
> generating the skill vector using the plurality of words, corresponding word vectors, and corresponding sub-concepts.

Memory module(s)
101

Hardware processor(s) 102

Communication interface(s) 103

System 100

Fig. 1

```
┌─────────────────────────────┐
│   Building data corpus for an│  ⌐202
│     identified first skill   │
└─────────────────────────────┘
              │
              ▼
┌─────────────────────────────┐
│ Identifying a plurality of   │  ⌐204
│ words that match the         │
│ identified first skill, from │
│        the data corpus       │
└─────────────────────────────┘
              │
              ▼
┌─────────────────────────────┐
│  Generating a word vector    │  ⌐206
│  each, for each of the       │
│  plurality of identified     │
│          words               │
└─────────────────────────────┘
              │
              ▼
┌─────────────────────────────┐
│  Generating a skill vector   │  ⌐208
│  for the identified first    │
│  skill, based on the word    │
│  vectors of the plurality of │
│      identified words        │
└─────────────────────────────┘
              │
              ▼
┌─────────────────────────────┐
│  Comparing the skill vector  │  ⌐210
│  of the identified first     │
│  skill with skill vector of  │
│  at least one other skill to │
│  perform skill matching      │
└─────────────────────────────┘
              │
              ▼
┌─────────────────────────────┐
│  Classifying the at least one│  ⌐212
│  other skill as relevant or  │
│  irrelevant, based on the    │
│         comparison           │
└─────────────────────────────┘
```

200

Fig. 2

Generating a similarity score
indicating extent of similarity of the
identified first skill with the at least
one other skill

302

Comparing the extent of similarity
with a threshold of similarity

304

Extent of
**similarity** ≥
threshold of
similarity?

306

Yes

No

Classify the at least
one other skill as
'relevant'

308

Classify the at least
one other skill as
'irrelevant'

310

300

Fig. 3

Europäisches
Patentamt
European
Patent Office
Office européen
des brevets

## EUROPEAN SEARCH REPORT

Application Number

EP 20 15 3993

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/232421 A1 (DIALANI VIJAY [US] ET AL) 16 August 2018 (2018-08-16) * abstract; figures 1,2 * * paragraph [0039] - paragraph [0048] * ----- | 1-12 | INV. G06Q10/06 |
| X | US 2017/177580 A1 (MARKMAN VITA [US]) 22 June 2017 (2017-06-22) * abstract; figures 1, 3 * * paragraph [0014] - paragraph [0022] * * paragraph [0024] - paragraph [0040] * ----- | 1-12 | |

TECHNICAL FIELDS
SEARCHED     (IPC)

G06Q

The present search report has been drawn up for all claims

| Place of search | Date of completion of the search | Examiner |
|---|---|---|
| Munich | 30 March 2020 | Peller, Ingrid |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
....................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 15 3993

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2020

| Patent document cited in search report | Publication date | Patent family member(s) | Publication date |
|---|---|---|---|
| US 2018232421 A1 | 16-08-2018 | NONE | |
| US 2017177580 A1 | 22-06-2017 | NONE | |

EPO FORM P0459

For more details about this annex : see Official Journal of the European Patent Office, No. 12/82

**EP 3 690 772 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201921003594